(19) Europäisches Patentamt
European Patent Office
Office européen des brevets

(11) Veröffentlichungsnummer: **0 214 099 A2**

(12) # EUROPÄISCHE PATENTANMELDUNG

(21) Anmeldenummer: 86810376.3

(22) Anmeldetag: 22.08.86

(51) Int. Cl.4: C 08 K 5/00
C 08 L 23/04
//(C08K5/00, 5:13, 5:34)

(30) Priorität: 28.08.85 CH 3684/85

(43) Veröffentlichungstag der Anmeldung: 11.03.87 Patentblatt 87/11

(84) Benannte Vertragsstaaten: BE DE FR GB IT NL SE

(71) Anmelder: CIBA-GEIGY AG
Klybeckstrasse 141
CH-4002 Basel(CH)

(72) Erfinder: Hofmann, Peter, Dr.
Lerchenstrasse 57
CH-4059 Basel(CH)

(54) **Stabilisierung von vernetzten Ethylenpolymeren.**

(57) Synergistische Stabilisatorgemische aus (a) einem ausgewählten phenolischen Stabilisator und (b) einer s-Triazinverbindung, die mindestens eine 2,2,6,6-Tetramethylpiperidingruppe enthält, werden zur Stabilisierung von vernetzten Ethylenpolymeren, insbesondere von vernetztem Polyethylen vorgeschlagen.

EP 0 214 099 A2

Croydon Printing Company Ltd.

0214099

CIBA-GEIGY AG
Basel (Schweiz)

3-15484/+

## Stabilisierung von vernetzten Ethylenpolymeren

Die Erfindung betrifft ein Verfahren zur Stabilisierung von vernetzten Ethylenpolymeren sowie die so stabilisierten vernetzten Ethylenpolymeren.

Unter Ethylenpolymeren werden dabei sowohl Ethylenhomopolymere verstanden, wie Polyethylen niedriger oder hoher Dichte, als auch Copolymere wie z.B. Copolymerisate mit anderen α-Olefinen, mit Vinylestern oder mit (Meth)Acrylsäureestern.

Es ist bekannt, dass man solche Ethylenpolymere radikalisch vernetzen kann, wodurch die Wärmestandfestigkeit des Polymeren erhöht wird und sich das Material für eine Verwendung bei höheren Temperaturen eignet. Bei den höheren Temperaturen macht sich jedoch eine raschere thermisch-oxidative Alterung bemerkbar, sodass man solchen Polymeren meist geeignete Stabilisatoren zusetzt. Der Zusatz erfolgt vor der Vernetzung und vor der Formgebung. Es ist aus der EP-A-101411 bereits bekannt, dass s-Triazine mit 2,2,6,6-Tetramethylpiperidin-Gruppen als Stabilisatoren für vernetzte Polyolefine besonders geeignet sind. Es wurden neuerdings im EP-A-113914 synergistische Gemische aus 2,2'-Thiodiethyl-bis[3-(3,5-di-tert-butyl-4-hydroxyphenyl)-propionat] und einem bestimmten Polyaminotriazin mit Tetramethylpiperidin-Seitengruppen zum Stabilisieren von vernetzbaren Ethylenpolymerisaten vorgeschlagen. Ein solches synergistisches Gemisch ist wirksamer als die Einzelkomponenten und ermöglicht dadurch eine Reduktion der zugesetzten Menge an Stabilisator.

Es wurden nunmehr andere synergistische Gemische gefunden, die als Stabilisatoren für vernetzte Ethylenpolymere nicht nur wirksamer als alle bisher bekannten einzelnen Stabilisatoren sondern auch wirksamer als die bekannten synergistischen Stabilisatorengemische sind.

Die Erfindung betrifft ein Verfahren zum Stabilisieren von vernetzten Ethylen(co)polymeren durch Zusatz von 0,1 bis 1,0 Gew.-%, bezogen auf das Polymere, eines synergistischen Gemisches, bestehend aus

(a) einem phenolischen Stabilisator, der mindestens eine Gruppe der Formel A enthält,

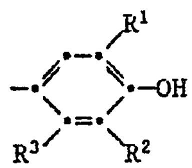

A

worin $R^1$ tert. Butyl oder Cyclohexyl bedeutet, $R^2$ Wasserstoff, Methyl oder Cyclohexyl bedeutet und $R^3$ Wasserstoff oder Methyl bedeutet, und

(b) einem Stabilisator aus der Klasse der Triazinaminopiperidine, der mindestens eine Gruppe der Formel B enthält,

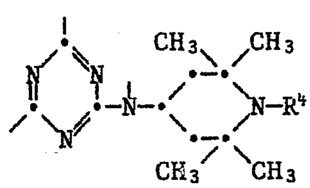

B

worin $R^4$ Wasserstoff, Oxyl-Sauerstoff, $C_1$-$C_{12}$-Alkyl, $C_3$-$C_7$-Alkenylmethyl, $C_7$-$C_{11}$-Phenylalkyl, $C_2$-$C_5$-Alkanoyl oder $C_3$-$C_5$-Alkenoyl bedeutet,
in einem Gewichtsverhältnis von (a) : (b) von 0,1 bis 4, zum Polymeren vor der Vernetzung.

$R^4$ als $C_1$-$C_{12}$-Alkyl kann z.B. Methyl, Ethyl, Propyl, Butyl, Hexyl, 2-Ethylhexyl oder Dodecyl sein. $R^4$ als $C_3$-$C_7$-Alkenylmethyl kann z.B. Allyl, Methallyl oder 2-Butenyl sein. $R^4$ als $C_7$-$C_{11}$-Phenylalkyl kann z.B. Benzyl, 2-Phenylethyl oder 3-Phenylpropyl sein. $R^4$ als Alkanoyl oder Alkenoyl kann z.B. Acetyl, Propionyl, Butyroyl, Acryloyl oder Methacryloyl sein.

Bevorzugt ist $R^4$ Wasserstoff oder Methyl.

Verbindungen, die eine Gruppe A enthalten, sind als Antioxidantien bekannt und werden insbesondere zum Stabilisieren von Polyolefinen verwendet.

Bevorzugt verwendet man synergistische Gemische, die als Komponente (a) eine der folgenden Verbindungen (Formel I bis VI) enthalten:

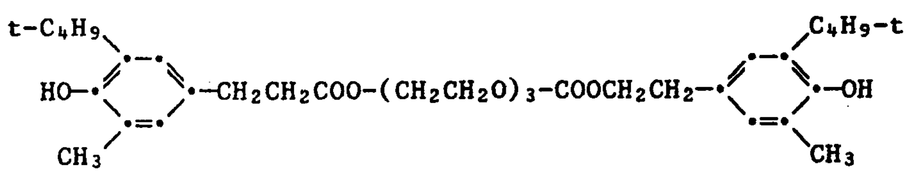

I

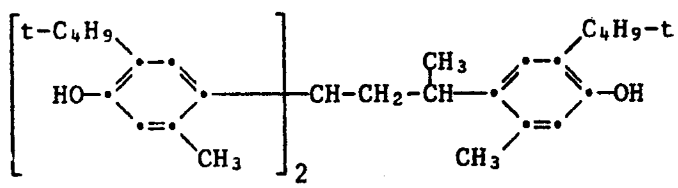

II

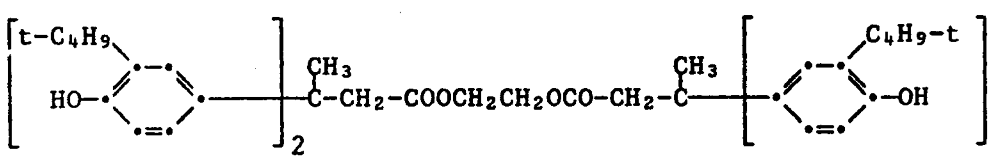

III

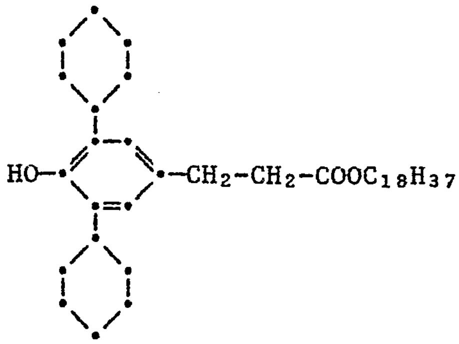

IV

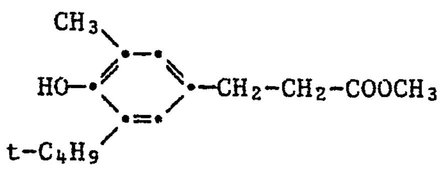

V

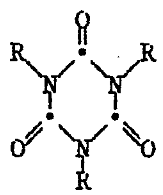

R = 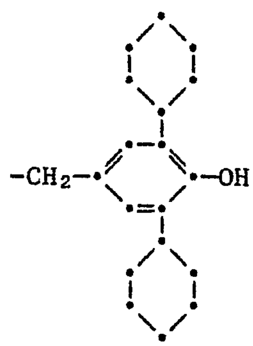

VI

Besonders bevorzugt sind Gemische, die als Komponente (a) die Verbindung der Formel I enthalten. Diese Verbindung ist unter der Bezeichnung Irganox® 245 im Handel.

Die Triazinverbindungen der Komponente (b) sind ebenfalls bekannte Verbindungen, die vor allem als Lichtschutzmittel für organische Polymere, insbesondere für Polyolefine, verwendet werden. Diese Verbindungen können nur einen Triazinrest enthalten oder mehrere Triazinreste, die z.B. über Diamine oder Polyamine aneinander gebunden sind. Sie enthalten mindestens einen, vorzugsweise mehrere Tetramethylpiperidinreste.

 

Verbindungen dieser Art sind z.B. in den US-PS 3 925 376, 4 086 204, 4 108 829, 4 288 593, 4 294 963, 4 313 829, 4 331 586, 4 335 242, 4 348 493, 4 356 287, 4 412 020, 4 413 093, 4 459 395, in der DE-A-2 752 740 und in den EP-A- 24 338, 29 522, 42 554, 53 775, 65 169, 72 009 und 101 411 beschrieben.

Bevorzugt als Komponente (b) sind Verbindungen der Formel VII,

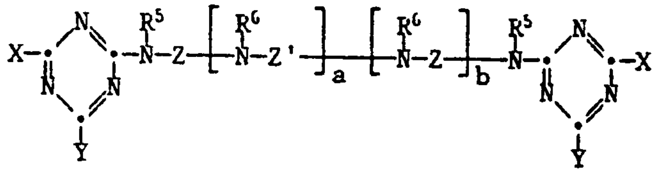

VII

worin X und Y unabhängig voneinander eine Gruppe $-NR^7R^8$ oder $-OR^9$ sind, $R^5$ Wasserstoff oder eine Gruppe der Formel VIII bedeutet,

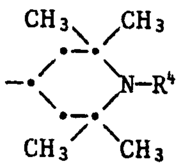

VIII

$R^6$ eine Gruppe der Formel IX bedeutet,

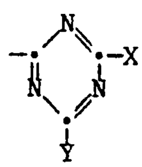

IX

$R^7$ Wasserstoff, $C_1$-$C_{12}$-Alkyl, $C_3$-$C_7$-Alkenylmethyl, $C_3$-$C_{12}$-Alkoxyalkyl, $C_1$-$C_4$-Hydroxyalkyl, Cyclohexyl, Benzyl oder eine Gruppe der Formel VIII bedeutet, $R^8$ $C_1$-$C_{12}$-Alkyl, $C_3$-$C_7$-Alkenylmethyl, $C_1$-$C_4$-Hydroxyalkyl, Cyclohexyl, Benzyl, Phenyl oder eine Gruppe der Formel VIII bedeutet, oder $R^7$ und $R^8$ zusammen Tetra- oder Pentamethylen oder 3-Oxapentamethylen bedeuten, $R^9$ $C_1$-$C_{12}$-Alkyl oder $C_3$-$C_7$-Alkenylmethyl bedeutet, Z und Z' Alkylen mit 2-10 C-Atomen bedeuten und a und b null oder 1 sind. Hierbei ist mindestens einer der Substituenten $R^5$, $R^7$, $R^8$ eine Gruppe der Formel VIII.

$R^7$, $R^8$ und $R^9$ als $C_1$-$C_{12}$-Alkyl können unverzweigtes oder verzweigtes Alkyl sein, wie z.B. Methyl, Ethyl, Isopropyl, n-Butyl, Tert-Butyl, n-Hexyl, 2-Ethylbutyl, Isooctyl, n-Decyl oder n-Dodecyl.

$R^7$, $R^8$ und $R^9$ als $C_3$-$C_7$-Alkenylmethyl können insbesondere Allyl oder Methallyl sein.

$R^7$ und $R^8$ als Alkoxyalkyl oder Hydroxyalkyl können z.B. Methoxymethyl, Ethoxymethyl, 2-Isopropoxyethyl, 2-Methoxypropyl, Hydroxymethyl, 2-Hydroxyethyl oder 2-Hydroxypropyl sein.

Z und Z' können unverzweigtes oder verzweigtes Alkylen sein, wie z.B. Di-, Tri, Tetra-, Penta-, Hexa-, Octa- oder Decamethylen, 2,2-Dimethyl-trimethylen oder 2,2,4-Trimethyl-hexamethylen.

Zu den Verbindungen der Formel VII gehören solche, worin a und b null sind, Z $-(CH_2)_6-$ ist und $R^5$ eine Gruppe der Formel VIII ist. Diese entsprechen, der Formel VIIa, wofür folgende Verbindungen beispielhaft genannt sind:

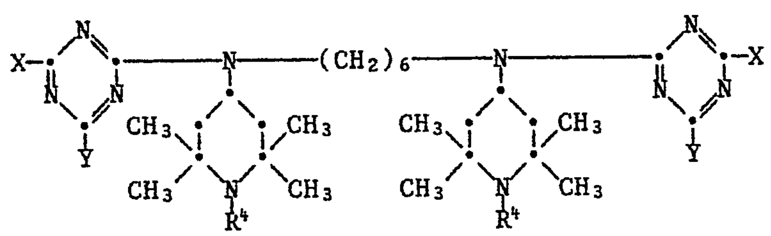

VII a

Verbindung Nr. 1: X = Y = $-NH-CH_2-CH=CH_2$, $R^4$ = H

Verbindung Nr. 2: X = Y = $-O-CH_2-CH=CH_2$, $R^4$ = $CH_3$

Verbindung Nr. 3: X = $-NH-CH_2CH=CH_2$, Y = 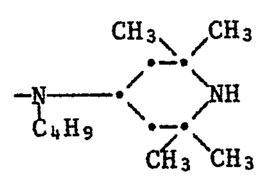 , $R^4$ = H

Verbindung Nr. 4: X=-N($CH_2CH=CH_2$)$_2$, Y = 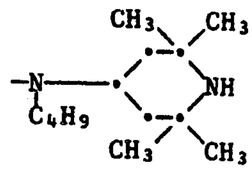 , $R^4$ = H

Zu den Verbindungen der Formel VII gehören auch solche, worin a=0 ist, b=1 ist, Z die Gruppe $-CH_2CH_2-$, $R^5$ Wasserstoff und $R^6$ eine Gruppe der Formel IX ist. Diese entsprechen der Formel VII b, wofür die folgende Verbindung beispielhaft genannt ist:

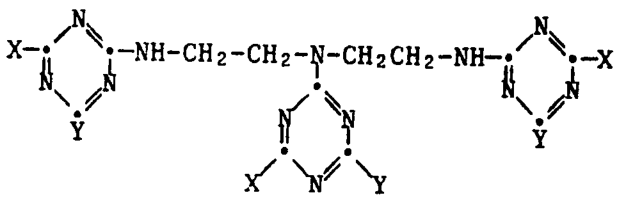

VII b

Verbindung Nr. 5: X = $-NH-CH_2CH=CH_2$, Y = 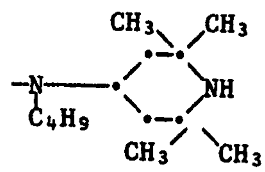

Zu den Verbindungen der Formel VII gehören ferner auch solche, worin a und b 1 sind, Z die Gruppe $-(CH_2)_3-$ und Z' die Gruppe $-CH_2CH_2-$ bedeuten, $R^5$ Wasserstoff ist und $R^6$ eine Gruppe der Formel IX bedeutet. Diese entsprechen der Formel VII c, wofür die folgenden Verbindungen beispielhaft genannt sind.

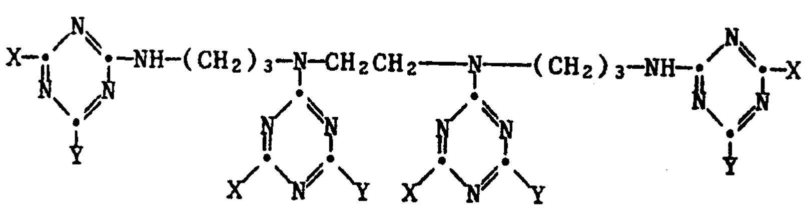

VII c

Verbindung Nr. 6: X=Y= 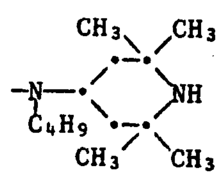

Verbindung Nr. 7: X=Y= 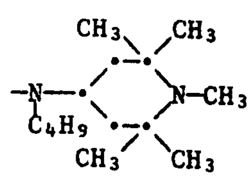

Die Verbindungen Nr. 1, 3, 4, 5 sind in der EP-A-101 411 beschrieben, die Verbindung Nr. 6 ist in der DE-PS 2 636 130 beschrieben.

Eine weitere Gruppe von bevorzugten Verbindungen der Komponente (b) sind Verbindungen der Formel X,

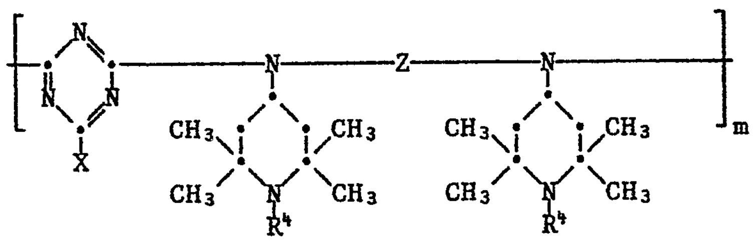

X

worin m ein Wert von 2 bis 20 ist, $R^4$ die für Formel B gegebene Bedeutung hat und X und Z die für Formel VII gegebenen Bedeutungen haben.

Beispiele für Verbindungen der Formel X sind:

Verbindung Nr.8: Z = $-(CH_2)_6-$, X = 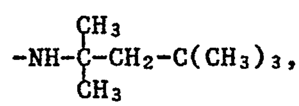, $R^4$ = H

Verbindung Nr. 9: Z = $-(CH_2)_6-$, X = 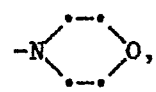, $R^4$ = H

Verbindung Nr.10: Z = $-(CH_2)_6-$, X = 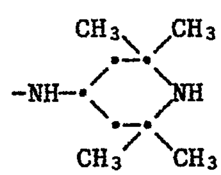, $R^4$ = H

Verbindung Nr. 8 ist ein handelsüblicher Stabilisator (Chimassorb® 944), Verbindung Nr. 9 ist in der US-PS 4 331 586 und Verbindung Nr. 10 in der US-PS 4 086 204 beschrieben.

Die Komponenten (a) und (b) stehen in einem Gewichtsverhältnis von 0,1 bis 4, das heisst die Menge der Komponente (b) kann bis zum Zehnfachen der Menge von (a) betragen und die Menge der Komponente

(a) kann bis zum Vierfachen der Menge von (b) betragen. Vorzugsweise beträgt das Gewichtsverhältnis a:b 0,12 bis 2. Von diesem synergistischen Gemisch gibt man dem Polymeren 0,1 bis 1,0 Teile auf 100 Teile Polymer vor dem Vernetzen zu.

Die Erfindung betrifft weiterhin auch ein vernetztes Ethylen-Homopolymer oder -Copolymer, enthaltend auf 100 Teile des Polymeren 0,1 bis 1,0 Teile des vorhin beschriebenen Stabilisatorgemisches.

Das Ethylenpolymer kann ein Ethylen-Homopolymer sein, beispielsweise ein Polyethylen hoher oder niedriger Dichte. Solche Polyethylene mit Dichten von 0,91 bis 0,97 sind im Handel erhältlich. Aber auch Ethylen-Copolymere lassen sich vernetzen. Beispiele hierfür sind Copolymere mit anderen Olefinen, wie z.B. Ethylen-Propylen-Buten-1-Copolymere; Copolymere mit Vinylestern, wie z.B. Ethylen-Vinylacetat-Copolymere; oder Copolymere mit (Meth)Acrylsäureestern, wie z.B. Ethylen-Methylacrylat-Copolymere. Bevorzugt eignet sich das Verfahren zur Stabilisierung von Ethylen-Homopolymeren.

Die Zugabe des Stabilisatorgemisches zum Polymer geschieht vor der formgebenden Verarbeitung. Vorzugsweise mischt man das Stabilisatorgemisch in Pulverform bei Raumtemperatur dem Polymeren zu.

Hierbei können auch sonstige Zusätze zugemischt werden, insbesondere Vernetzungsmittel. Als Vernetzungsmittel verwendet man thermische Radikalbildner, das sind Verbindungen, die beim Erwärmen freie Radikale erzeugen, wie z.B. organische Peroxyverbindungen, Azoverbindungen oder Diphenylethanderivate. Beispiele hierfür sind Dicumylperoxid, tert.Butylperoxybenzoat, Dibenzoylperoxid, 2,2-Azobis(2-acetoxypropan) oder 1,2-Diphenylbernsteinsäurenitril. Auch O-acylierte Hydroximsäureester wie z.B. das Ethyl-O-benzoyl-laurohydroximat können als Vernetzungsmittel verwendet werden. Die Vernetzung kann aber auch durch energiereiche Strahlung, z.B. durch Elektronenstrahlen, bewirkt werden.

Weitere übliche Zusätze sind Verarbeitungsstabilisatoren, wofür vor allem organische Phosphite verwendet werden, Thiosynergisten, wie z.B. Dilauryl-thiodipropionat, Pigmente, Füllstoffe, Flammschutzmittel oder Treibmittel.

Die formgebende Verarbeitung kann nach den für vernetzbare Polyolefine üblichen Methoden geschehen, beispielsweise durch Extrusion oder Rotationsguss. Anschliessend werden die Formkörper thermisch vernetzt. Beim Rotationsguss-Verfahren geht die thermische Formgebung unmittelbar in die thermische Vernetzung über. Bei der formgebenden Verarbeitung durch Extrusion oder Rotationsguss ist eine vorzeitige Vernetzung des Polymeren nicht erwünscht. Es ist ein weiterer Vorteil der erfindungsgemässen Stabilisatorgemische, dass sie die vorzeitige Vernetzung zurückdrängen.

Technische Bedeutung hat der Einsatz von vernetzten Ethylenpolymeren vor allem für Kabelisolierungen und für Rohre gefunden. Ferner haben Hohlkörper aus vernetzten Ethylenpolymeren, die im Rotationsgussverfahren hergestellt werden, eine erhöhte Schlagzähigkeit, insbesondere bei tiefen Temperaturen, und eine erhöhte Beständigkeit gegen Spannungsrisskorrosion.

Enthält die Komponente (b) eine oder mehrere ethylenisch ungesättigte Gruppen, so kann bei der Vernetzung eine Polymerisation dieses Stabilisators unter sich oder eine chemische Bindung an das vernetzte Polymer eintreten. Beides verlängert die Stabilisatorwirkung. Hierbei kann auch eine zusätzliche Vernetzung des Polymeren stattfinden, wodurch die Menge des zugesetzten Vernetzungsmittels reduziert werden kann.

Die Erfindung wird durch die nachstehenden Beispiele näher erklärt ohne dass sie auf diese Beispiele beschränkt werden soll. Darin bedeuten Teile Gewichtsteile und % Gewichts-%. Die Temperaturen sind in °C angegeben.

Beispiel 1: 36 g Polyethylen niederer Dichte (Schmelzindex 2, Dichte 0,92) werden in granulierter Form mit den in der Tabelle angegebenen pulverförmigen Stabilisatoren gemischt und im Brabender Plastographen bei 130° durch intensives Kneten mit 50 Upm homogenisiert. Nach 5 Minuten werden weitere 12 g Polyethylen zugegeben, die vorher mit 0,86 g Dicumylperoxid vermischt wurden. Nach weiteren 5 Minuten Kneten bei 130° wird die Polymermischung bei 130° zu einer 1,5 mm dicken Platte verpresst. Die Platte wird anschliessend 15 Minuten auf 180° erhitzt, wobei die Vernetzung stattfindet.

Aus der Platte werden Prüfkörper nach DIN 53504 ausgestanzt, die im Umluftofen 1 Woche bei 150° gealtert werden. Vor und nach der Alterung wird die Reissdehnung der Proben gemessen. Tabelle 1 zeigt die prozentuelle Erhaltung der ursprünglichen Reissdehnung.

Gemäss der internationalen Norm IEC 502 für Kabelisolationen aus vernetztem Polyethylen soll nach 1 Woche bei 135° die Reissdehnung mindestens 75 % des Ausgangswertes betragen. Die hier durchgeführte Alterung bei 150° entspricht also einer verschärften Prüfung.

Folgende Stabilisatoren werden verwendet:

Pip-1 = Verbindung Nr. 8

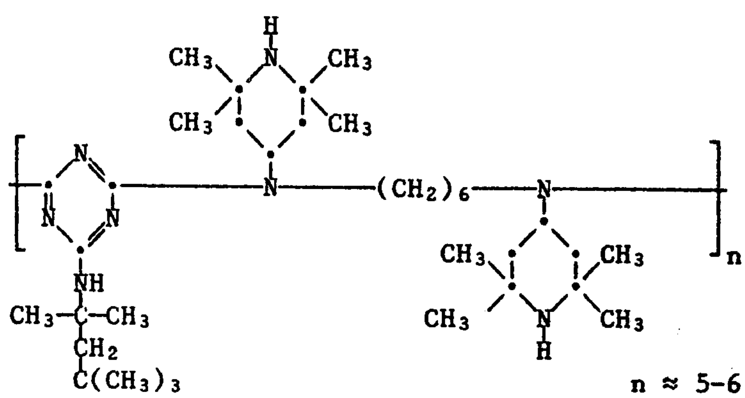

n ≈ 5-6

AO-1 = Verbindung der Formel I

AO-2 = Verbindung der Formel II

AO-3 = Verbindung der Formel III

AO-4 = Verbindung der Formel IV

Tabelle 1

| Stabilisatoren (in % bezogen auf Polymer) | | | | | Erhalt der Reissdehnung (in %) nach 1 Woche bei 150° |
|---|---|---|---|---|---|
| Pip-1 | AO-1 | AO-2 | AO-3 | AO-4 | |
| 0,4 | - | - | - | - | 59 |
| - | 0,4 | - | - | - | 0*) |
| 0,2 | 0,2 | - | - | - | 92 |
| 0,3 | - | - | - | - | 50 |
| - | 0,3 | - | - | - | 0*) |
| 0,15 | 0,15 | - | - | - | 88 |
| - | - | 0,3 | - | - | 0*) |
| 0,15 | - | 0,15 | - | - | 91 |
| - | - | - | 0,3 | - | 0*) |
| 0,15 | - | - | 0,15 | - | 96 |
| - | - | - | - | 0,3 | 0*) |
| 0,15 | - | - | - | 0,15 | 82 |

*) bereits nach 2 Tagen zersetzt

Beispiel 2: Es wird wie in Beispiel 1 gearbeitet. Als Piperidinverbindung werden jedoch die folgenden Triazinderivate verwendet:

Pip-2 = Verbindung Nr. 1

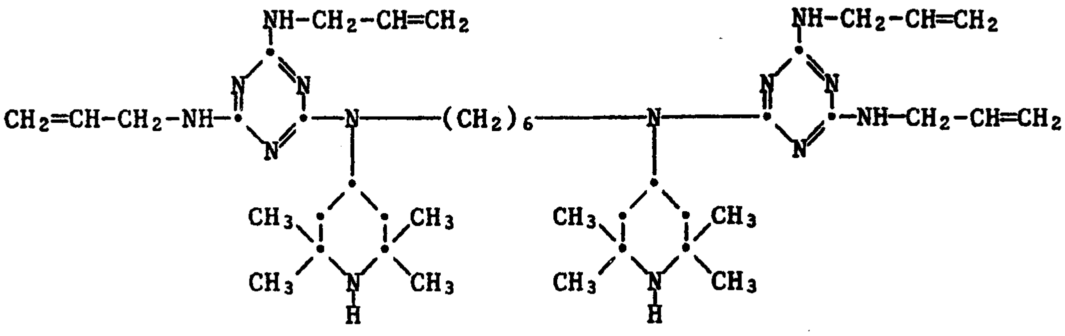

Pip-3 = Verbindung Nr. 5

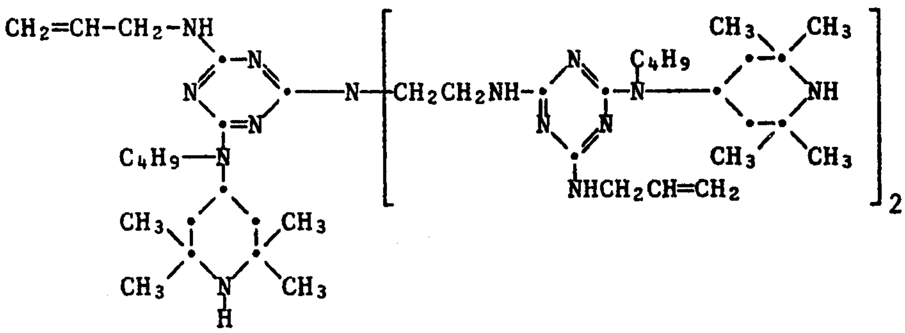

Tabelle 2

| Stabilisatoren (in % bezogen auf Polymer) | | | | | Erhalt der Reissdehnung (in %) nach 1 Woche bei 150° |
|---|---|---|---|---|---|
| Pip-2 | Pip-3 | AO-1 | AO-2 | AO-4 | |
| 0,4 | - | - | - | - | 86 |
| - | - | 0,4 | - | - | 0 |
| 0,2 | - | 0,2 | - | - | 102 |
| - | 0,4 | - | - | - | 85 |
| - | 0,2 | 0,2 | - | - | 105 |
| 0,3 | - | - | - | - | 74 |
| - | - | 0,3 | - | - | 0 |
| 0,15 | - | 0,15 | - | - | 108 |

Fortsetzung Tabelle 2

| Pip-2 | Pip-3 | AO-1 | AO-2 | AO-4 | |
|---|---|---|---|---|---|
| - | - | - | 0,3 | - | 0 |
| 0,15 | - | - | 0,15 | - | 89 |
| - | - | - | - | 0,3 | 0 |
| 0,15 | - | - | - | 0,15 | 96 |

Beispiel 3

Es wird wie in Beispiel 1 gearbeitet. Folgende zusätzliche Stabilisatoren werden verwendet:

Pip-4 = Verbindung Nr. 7

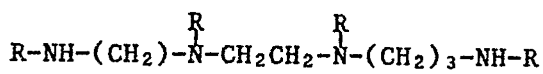

R=

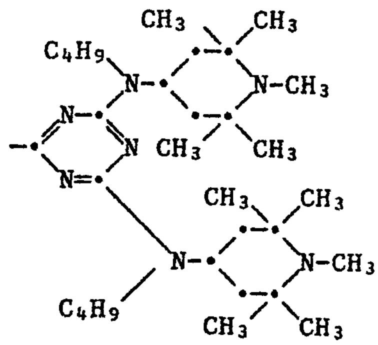

AO-5 = Verbindung der Formel V

AO-6 = Verbindung der Formel VI

Tabelle 3

| Stabilisatoren (in % bezogen auf Polymer) | | | | | | | Erhalt der Reissdehnung (in %) nach 1 Woche bei 150° |
|---|---|---|---|---|---|---|---|
| Pip-4 | AO-1 | AO-2 | AO-3 | AO-4 | AO-5 | AO-6 | |
| 0,3 | - | - | - | - | - | - | 66 |
| - | 0,3 | - | - | - | - | - | 0 |
| 0,15 | 0,15 | - | - | - | - | - | 104 |
| - | - | 0,3 | - | - | - | - | 0 |
| 0,15 | - | 0,15 | - | - | - | - | 97 |
| - | - | - | 0,3 | - | - | - | 0 |
| 0,15 | - | - | 0,15 | - | - | - | 95 |
| - | - | - | - | 0,3 | - | - | 0 |
| 0,15 | - | - | - | 0,15 | - | - | 101 |
| - | - | - | - | - | 0,3 | - | 0 |
| 0,15 | - | - | - | - | 0,15 | - | 90 |
| - | - | - | - | - | - | 0,3 | 0 |
| 0,15 | - | - | - | - | - | 0,15 | 103 |

Aus allen Beispielen ist ein deutlicher Synergismus der Komponenten (a) und (b) zu ersehen.

Patentansprüche

1. Verfahren zum Stabilisieren von vernetzten Ethylen(co)polymeren durch Zusatz von 0,1 bis 1,0 Gewichts-%, bezogen auf das Polymere, eines synergistischen Gemisches, bestehend aus

(a) einem phenolischen Antioxidans, das mindestens eine Gruppe der Formel A enthält,

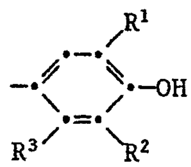

A

worin $R^1$ tert. Butyl oder Cyclohexyl bedeutet, $R^2$ Wasserstoff, Methyl oder Cyclohexyl bedeutet und $R^3$ Wasserstoff oder Methyl bedeutet, und

(b) einem Lichtschutzmittel aus der Klasse der Triazinaminopiperidine, das mindestens eine Gruppe der Formel B enthält,

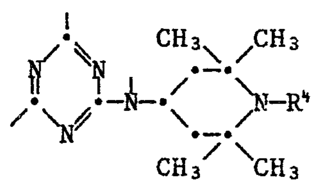

B

worin $R^4$ Wasserstoff, Oxyl-Sauerstoff, $C_1$-$C_{12}$-Alkyl, $C_3$-$C_7$-Alkenylmethyl, $C_7$-$C_{11}$-Phenylalkyl, $C_2$-$C_5$-Alkanoyl oder $C_3$-$C_5$-Alkenoyl bedeutet,
in einem Gewichtsverhältnis von (a) : (b) von 0,1 bis 4, zum Polymeren vor der Vernetzung.

2. Verfahren gemäss Anspruch 1, wobei das Gewichtsverhältnis (a) : (b) 0,12 bis 2 beträgt.

3. Verfahren gemäss Anspruch 1, wobei die Komponente (a) eine der folgenden Verbindungen ist:

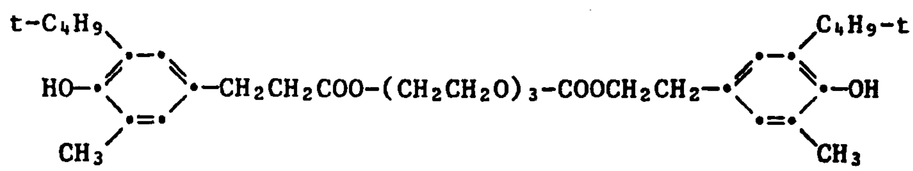

I

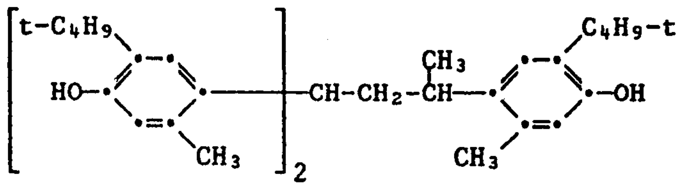

II

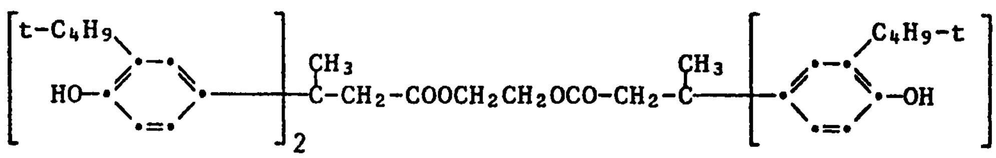

III

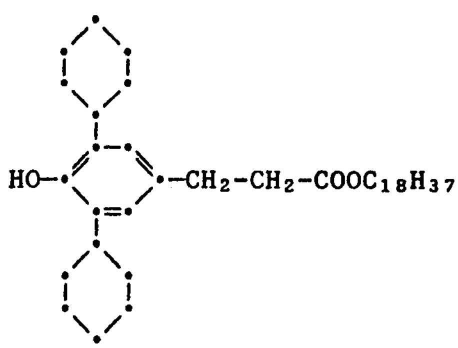

IV

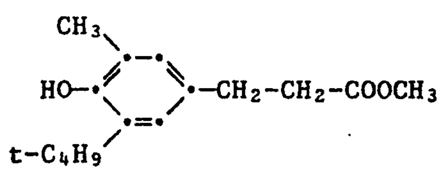

V

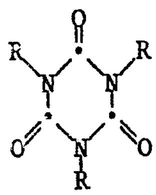 R= 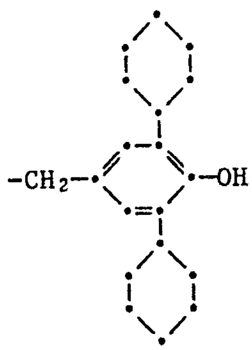 VI

4. Verfahren gemäss Anspruch 1, wobei die Komponente (a) die Verbindung der Formel I ist.

5. Verfahren gemäss Anspruch 1, wobei die Komponente (b) eine Verbindung der Formel VII ist,

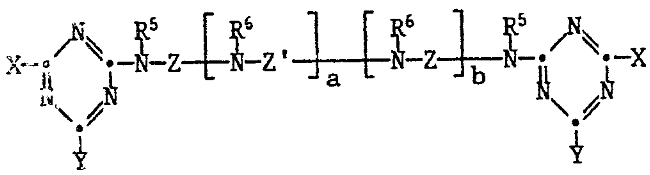 VII

worin X und Y unabhängig voneinander eine Gruppe $-NR^7R^8$ oder $-OR^9$ sind, $R^5$ Wasserstoff oder eine Gruppe der Formel VIII bedeutet,

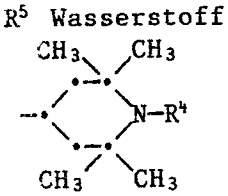 VIII

$R^6$ eine Gruppe der Formel IX bedeutet,

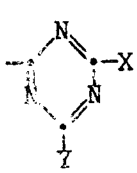 IX

$R^7$ Wasserstoff, $C_1$-$C_{12}$-Alkyl, $C_3$-$C_7$-Alkenylmethyl, $C_3$-$C_{12}$-Alkoxyalkyl, $C_1$-$C_4$-Hydroxyalkyl, Cyclohexyl, Benzyl oder eine Gruppe der Formel VIII bedeutet, $R^8$ $C_1$-$C_{12}$-Alkyl, $C_3$-$C_7$-Alkenylmethyl, $C_1$-$C_4$-Hydroxyalkyl, Cyclohexyl, Benzyl, Phenyl oder eine Gruppe der Formel VIII bedeutet, oder $R^7$ und $R^8$ zusammen Tetra- oder Pentamethylen oder 3-Oxapentamethylen bedeuten, $R^9$ $C_1$-$C_{12}$-Alkyl oder $C_3$-$C_7$-Alkenylmethyl bedeutet,

Z und Z' Alkylen mit 2-10 C-Atomen bedeuten und a und b null oder 1 sind, wobei mindestens einer der Substituenten $R^5$, $R^7$, $R^8$ eine Gruppe der Formel VIII ist.

6. Verfahren gemäss Anspruch 5, wobei in Formel VII a und b null sind, Z-$(CH_2)_6$- ist und $R^5$ eine Gruppe der Formel VIII ist.

7. Verfahren gemäss Anspruch 5, wobei in Formel VII a=0, b=1, Z $-CH_2CH_2-$, $R^5$ Wasserstoff und $R^6$ eine Gruppe der Formel IX sind.

8. Verfahren gemäss Anspruch 5, wobei in Formel VII a und b 1 sind, Z $-(CH_2)_3-$ und Z' $-CH_2CH_2-$ bedeuten, $R^5$ Wasserstoff ist und $R^6$ eine Gruppe der Formel IX bedeutet.

9. Verfahren gemäss Anspruch 1, wobei die Komponente (b) eine Verbindung der Formel X ist,

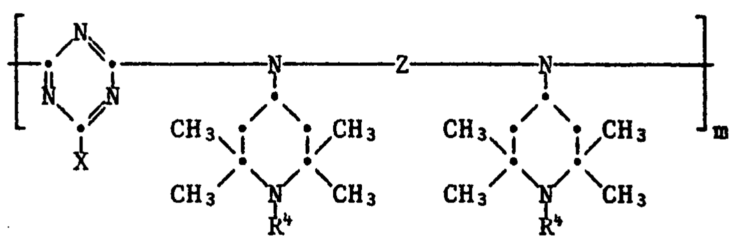

X

worin m ein Wert von 2 bis 20 ist, $R^4$ die in Anspruch 1 gegebene Bedeutung hat, X eine Gruppe $-NR^7R^8$ oder $-OR^9$ ist, worin $R^7$ Wasserstoff, $C_1$-$C_{12}$-Alkyl, $C_3$-$C_7$-Alkenylmethyl, $C_3$-$C_{12}$-Alkoxyalkyl, $C_1$-$C_4$-Hydroxyalkyl, Cyclohexyl, Benzyl oder eine Gruppe der Formel VIII bedeutet,

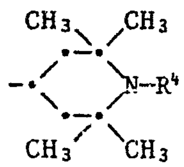

VIII

$R^8$ $C_1$-$C_{12}$-Alkyl, $C_3$-$C_7$-Alkenylmethyl, $C_1$-$C_4$-Hydroxyalkyl, Cyclohexyl, Benzyl, Phenyl oder eine Gruppe der Formel VIII bedeutet, oder $R^7$ und $R^8$ zusammen Tetra- oder Pentamethylen oder 3-Oxypentamethylen bedeuten und $R^9$ $C_1$-$C_{12}$-Alkyl oder $C_3$-$C_7$-Alkenyl bedeutet, und Z Alkylen mit 2-8 C-Atomen bedeutet.

10. Verfahren gemäss Anspruch 9, wobei in Formel X Z die Gruppe $-(CH_2)_6-$ bedeutet, X die Gruppe $-NH-C(CH_3)_2-CH_2-C(CH_3)_3$ bedeutet und $R^4$ Wasserstoff ist.

11. Verfahren gemäss Anspruch 9, wobei in Formel X Z die Gruppe $-(CH_2)_6-$ bedeutet, X einen Morpholinorest bedeutet und $R^4$ Wasserstoff ist.

12. Verfahren gemäss Anspruch 1, dadurch gekennzeichnet, dass man ein Ethylen-Homopolymer stabilisiert.

13. Vernetztes Ethylen-Homopolymer oder -Copolymer, enthaltend auf 100 Teile Polymer 0,1 bis 1,0 Teile eines synergistischen Gemisches aus (a) und (b) gemäss Anspruch 1.

14. Vernetztes Ethylencopolymer gemäss Anspruch 13, enthaltend als Vernetzungsmittel einen thermischen Radikalbildner.

15. Vernetztes Polyethylen gemäss Anspruch 13.